# EUROPÄISCHE PATENTSCHRIFT

(11) **EP 1 182 386 B1**
(45) Veröffentlichungstag und Bekanntmachung des Hinweises auf die Patenterteilung: **22.02.2006**
(21) Anmeldenummer: 01116190.8
(22) Anmeldetag: 04.07.2001
(51) Int. Cl.: F16K 1/38

(54) **Absperrvorrichtung mit Dichtung**
Shut-off device with sealing
Dispositif d'arrêt avec joint d'étanchéité

(30) Priorität: 05.07.2000 DE 10032037
(43) Veröffentlichungstag der Anmeldung: 27.02.2002
(73) Patentinhaber: GROHEDAL Sanitärsysteme GmbH & Co.KG, D-32457 Porta Westfalica (DE)
(72) Erfinder: Pieper, Gerhard, 32457 Porta Westfalica (DE)
(74) Vertreter: Ziegler, Thomas

(56) Entgegenhaltungen:
- CH-A- 388 051
- FR-A- 1 322 813
- FR-A- 2 302 460
- GB-A- 2 285 113
- US-A- 3 758 072

## Beschreibung

Die Erfindung betrifft eine Absperrvorrichtung mit einem kegelförmigen Dichtsitz und einem Verschlussglied, wobei in einer Ringnut des Verschlussglieds eine Dichtung für den Absperrvorgang am Dichtsitz angeordnet ist.

Eine Absperrvorrichtung dieser Gattung ist beispielsweise aus der Druckschrift DE 28 15 629 C2 bekannt. Bei dieser bekannten Ausbildung wird die Dichtung beim Absperrvorgang radial aufgeweitet, was nicht unerhebliche Stellkräfte erfordert.

Der Erfindung liegt die Aufgabe zu Grunde, die im Oberbegriff des Anspruchs 1 angegebene Absperrvorrichtung mit Dichtung zu verbessern.

Diese Aufgabe wird erfindungsgemäß dadurch gelöst, dass die Ringnut in der Mantelfläche eines mit dem Verschlussglied verbundenen Führungskörper ausgebildet ist, und das Verschlussglied mit einer ringförmigen, axial vorstehenden Schließschulter versehen ist, die die Ringnut zum Teil übergreift, wobei die Dichtung wenigstens eine zylindrische Außenmantelfläche und eine dem Dichtsitz zugekehrte, an den Außenmantel anschließende ebene Stirnfläche hat, von denen eine dem Dichtsitz zugekehrte Dichtkante gebildet ist, und die Dichtung sich wenigstens mit einem Teil der Außenmantelfläche an einer Innenseite der Schließschulter abstützt.
Weitere Ausgestaltungen der Erfindung sind in den Ansprüchen 2 bis 7 angegeben.

Mit den vorgeschlagenen Maßnahmen wird insbesondere erreicht, dass
- von der Dichtung ein aufgrund von Fertigungstoleranzen auftretender geringer Versatz zwischen Dichtsitz und Verschlussglied kompensiert werden kann;
- mit der Dichtung auch bei geringen Stellkräften und/oder niedrigen Druckverhältnissen oder Druckschwankungen eine sichere Absperrung gewährleistet werden kann;
- mit der an der Dichtung ausgebildeten Dichtkante eine relativ weiche Linienabdichtung am Dichtsitz erreichbar wird, die ein günstiges geräuscharmes Schließverhalten der Absperreinrichtung ermöglicht und auch Unebenheiten am Dichtsitz ausgleicht;
- die Dichtung in der Absperrstellung von der Innenseite der Schließschulter des Verschlussglieds abgestützt wird und somit eine relativ hohe Lebensdauer der Dichtung erzielbar ist.

In weiterer Ausgestaltung der Erfindung kann die Dichtung zweckmäßig als separater Ring ausgebildet werden, der in die Ringnut des Führungskörpers einsprengbar ist. Hierbei kann die ringförmige Dichtung vorteilhaft symmetrisch ausgebildet werden, wodurch an den beiden Endbereichen der zylindrischen Mantelfläche jeweils eine Dichtkante ausgebildet werden kann, so dass bei einem Verschleiß der ersten Dichtkante durch eine Drehung der Dichtung um 180° die zweite Dichtkante die Absperrfunktion übernehmen kann.

Ein Ausführungsbeispiel der Erfindung ist in der Zeichnung dargestellt und wird im Folgenden näher beschrieben. Es zeigt
- Fig. 1: einen Teil eines Selbstschlussventils, teilweise geschnitten, wobei in der linken Bildhälfte das Ventil in einer Öffnungsstellung und in der rechten Bildhälfte in der Absperrstellung gezeigt ist;
- Fig. 2: die in Fig. 1 gezeigte Dichtung in vergrößerter Darstellung.

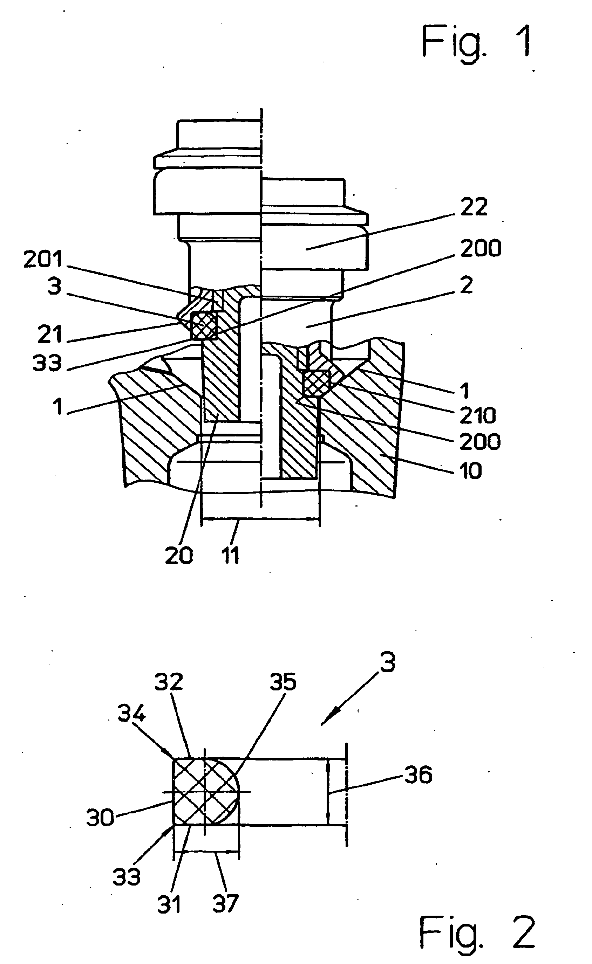

In der Zeichnung ist ein Teil eines Selbstschlussventils dargestellt, wobei in einem zum Teil gezeigten Ventilgehäuse 10 ein kegelförmiger Dichtsitz 1 ausgebildet ist. Mit dem Dichtsitz 1 wirkt ein Verschlussglied 2 mit einem Führungskörper 20 und einer Dichtung 3 zusammen.
Die Dichtung 3 ist als gummielastischer Ring ausgebildet und weist eine zylindrische Außenmantelfläche 30 auf, an deren Ende sich jeweils eine um 90° gedreht angeordnete ebene Stirnfläche 31,32 anschließt. An den schnittlinien der Stirnfläche 31 und der Außenmantelfläche 30 ist eine erste Dichtkante 33 und an den Schnittlinien der Stirnfläche 32 und der Außenmantelfläche 30 eine zweite Dichtkante 34 gebildet, wie es insbesondere aus Fig. 2 der Zeichnung zu entnehmen ist. Der innenliegende Bereich 35 der Dichtung 3 ist im Querschnitt halbkreisförmig ausgebildet. Die Querschnittsfläche der Dichtung 3 weist eine Breite 37 auf, die etwa der Dicke 36 der Dichtung 3 entspricht. Die Dichtung 3 ist in einer Ringnut 200 des Führungskörpers 20 einsprengbar. Der so komplettierte Führungskörper 20 ist mit einem Gewinde 201 in dem Verschlussglied 2 eingeschraubt. In der Einschraubposition wird die Dichtung 3 mit der Außenmantelfläche 30 von einer Innenseite 210 einer Schließschulter 21 des Verschlussglieds 2 bis etwa zur Hälfte abgestützt, wie es insbesondere aus der linken Seite der Fig. 1 der Zeichnung zu entnehmen ist. Die Schließschulter 21 weist am Außenbereich einen Kegelmantel auf, der dem kegelförmigen Dichtsitz 1 entspricht. Die Dichtkante 33 der Dichtung 3 steht hierbei zur Schließschulter 21 vor. Die Ringnut 200 ist im Querschnitt rechteckig ausgebildet und bildet in den Eckbereichen Freiräume, in denen das beim Absperrvorgang elastisch an der Dichtkante 33 verdrängte Dichtungsmaterial aufgenommen werden kann.
Beim Absperrvorgang wird das Verschlussglied 2 über einen im Selbstschlussventil angeordneten kolben 22 axial in Richtung auf den Dichtsitz 1 verschoben. Hierbei gelangt zunächst die Dichtkante 33 an dem kegelförmig ausgebildeten Dichtsitz 1 zur Anlage. Die relativ weiche Dichtkante 33 gleicht hierbei durch Fertigungstoleranzen etc. auftretende Unebenheiten an der Oberfläche des Dichtsitzes 1 sowie auch Achsversatze, die ebenfalls durch Fertigungstoleranzen auftreten können, zwischen dem Dichtsitz 1 und dem Verschlussglied 2 aus. Hierbei wird die Dichtung 3 an der Dichtkante 33 zunehmend verformt, wobei der elastische Dichtungswerkstoff entsprechend in die Freiräume in den Eckbereichen der Ringnut 200 gedrängt wird, bis die Kegelfläche der Schließschulter 21 an der kegelförmigen Oberfläche des Dichtsitzes 1 zur Anlage gelangt, mit der das Selbstschlussventil die Absperrposition einnimmt, wie es insbesondere aus Fig. 1, rechte Bildhälfte, zu entnehmen ist. Beim Öffnungsvorgang entspannt sich die elastisch verformte Dichtung 3 wieder in die in Fig. 1, linke Bildhälfte, gezeigte Form mit der vorstehenden Dichtkante 33. In der Absperrstellung ist die Dichtung 3 im Außenbereich völlig von der Innenseite 210 der Schließschulter 21 abgestützt und wird mit dem Bereich der Dichtkante 33 gegen den kegelförmigen Dichtsitz 1 gepresst. Die Dichtung 3 ist somit von allen Seiten abgestützt. Hierdurch wird eine relativ hohe Lebensdauer der Dichtung 3 aus einem verhältnismäßig weichen, elastischen, gummiartigen Werkstoff erreicht.

Die ringförmige Dichtung 3 kann zweckmäßig mit einer Dicke 36 versehen werden, die etwa mit einem Fünftel eines lichten Öffnungsdurchmessers 11 des Dichtsitzes 1 entspricht, wobei eine Breite 37 der Querschnittsfläche etwa der Dicke 36 entspricht.

Bei dem Ausführungsbeispiel ist die Absperrvorrichtung eines Selbstschlussventils dargestellt. Selbstverständlich kann die erfindungsgemäße Absperrvorrichtung auch in anderen Einrichtungen und Ventilen eingesetzt werden.

## Patentansprüche

1. Absperrvorrichtung mit einem kegelförmigen Dichtsitz (1) und einem entsprechenden Verschlussglied (2), wobei in einer Ringnut (200) des Verschlussglieds (2) eine Dichtung (3) für den Absperrvorgang am Dichtsitz (1) angeordnet ist, **dadurch gekennzeichnet, dass** die Ringnut (200) in der Mantelfläche eines mit dem Verschlussglied (2) verbundenen Führungskörpers (20) ausgebildet ist, und das Verschlussglied (2) mit einer ringförmigen, axial vorstehenden Schließschulter (21) versehen ist, die die Ringnut (200) zum Teil übergreift, wobei die Dichtung (3) wenigstens eine zylindrische Außenmantelfläche (30) und eine dem Dichtsitz (1) zugekehrte, an den Außenmantel anschließende ebene Stirnfläche (31,32) hat, von denen eine dem Dichtsitz (1) zugekehrte Dichtkante (33,34) gebildet ist, und die Dichtung (3) sich wenigstens mit einem Teil der Außenmantelfläche (30) an einer Innenseite (210) der Schließschulter (21) abstützt.

2. Absperrvorrichtung nach Anspruch 1, **dadurch gekennzeichnet, dass** an der Außenmantelfläche (30) der Dichtung (3) an beiden Endbereichen jeweils eine ebene Stirnfläche (31,32) anschließt und die Dichtung (3) als Ring in die Ringnut (200) einsetztbar ist, so dass nach einem Verschleiß der ersten Dichtkante (33) durch Drehung der Dichtung (3) um 180° eine zweite Dichtkante (34) einsetzbar ist.

3. Absperrvorrichtung nach Anspruch 1 oder 2, **dadurch gekennzeichnet, dass** der Führungskörper (20) mit Gewinde (201) am Verschlussglied (2) befestigt ist.

4. Absperrvorrichtung nach wenigstens einem der Ansprüche 1 bis 3, **dadurch gekennzeichnet, dass** die Schließschulter (21) mit der Innenseite (210) etwa die der Dichtkante (33) abgekehrte Hälfte der Außenmantelfläche (30) der Dichtung 3 umfasst.

5. Absperrvorrichtung nach wenigstens einem der Ansprüche 1 bis 4, **dadurch gekennzeichnet, dass** der von der Ringnut (200) aufgenommene Bereich (35) der Dichtung (3) im Querschnitt halbkreisförmig ausgebildet ist, während die Ringnut (200) einen rechteckigen Querschnitt aufweist, so dass bei einer Verpressung der Dichtkante (33,34) an dem Dichtsitz (1) das Dichtungsmaterial in den Freiraum der Ecken der Ringnut (200) elastisch ausweichen kann.

6. Absperrvorrichtung nach wenigstens einem der Ansprüche 1 bis 5, **dadurch gekennzeichnet, dass** die Dichtung (3) eine Dicke (36) aufweist, die etwa einem Fünftel eines lichten Öffnungsdurchmessers (11) des Dichtsitzes (1) entspricht.

7. Absperrvorrichtung nach Anspruch 6, **dadurch gekennzeichnet, dass** die Querschnittsfläche der Dichtung (3) eine Breite (37) aufweist, die etwa der Dicke (36) entspricht.

## Claims

1. Shut-off device having a conical sealing seat (1) and a corresponding closure member (2), a seal (3) for the shutting-off operation at the sealing seat (1) being arranged in an annular groove (200) of the closure member (2), **characterised in that** the annular groove (200) is formed in the enveloping surface of a guide body (20) connected to the closure member (2), and the closure member (2) is provided with an annular, axially projecting closing shoulder (21) which partly engages over the annular groove (200), the seal (3) having at least one cylindrical outer enveloping surface (30) and at least one flat end face (31, 32) that is adjacent to the outer envelope and that faces the sealing seat (1), by which a sealing edge (33, 34) facing the sealing seat (1) is formed, and at least part of the outer enveloping surface (30) of the seal (3) rests against an inner face (210) of the closing shoulder (21).

2. Shut-off device according to claim 1, **characterised in that** a flat end face (31, 32) is adjacent to the outer enveloping surface (30) of the seal (3) in each of the two end regions, and the seal (3) in the form of a ring is arranged to be inserted into the annular groove (200) so that after wear on the first sealing edge (33) a second sealing edge (34) can be used by rotating the seal (3) through 180°.

3. Shut-off device according to claim 1 or 2, **characterised in that** the guide body (20) is fastened to the closure member (2) by a screw thread (201).

4. Shut-off device according to at least one of claims 1 to 3, **characterised in that** the inner face (210) of the closing shoulder (21) surrounds approximately half the outer enveloping surface (30) of the seal 3, that half being remote from the sealing edge (33).

5. Shut-off device according to at least one of claims 1 to 4, **characterised in that that** region (35) of the seal (3) which is lodged in the annular groove (200) is of semi-circular cross-section, whereas the annular groove (200) has a rectangular cross-section, so that when the sealing edge (33, 34) is pressed against the sealing seat (1) the seal material can resiliently yield so as to enter the free space of the corners of the annular groove (200).

6. Shut-off device according to at least one of claims 1 to 5, **characterised in that** the seal (3) has a thickness (36) which corresponds approximately to one fifth of the diameter (11) of the free opening of the sealing seat (1).

7. Shut-off device according to claim 6, **characterised in that** the cross-section of the seal (3) has a width (37) which corresponds approximately to the thickness (36).

## Revendications

1. Dispositif d'arrêt comportant un siège d'étanchéité (1) de forme conique et un organe d'obturation (2) correspondant, avec une rainure annulaire (200) de l'organe d'obturation (2) recevant un joint (3) pour assurer la fermeture au niveau du siège d'étanchéité (1),
**caractérisé en ce que**
la rainure d'étanchéité (200) est réalisée dans la surface enveloppe d'un organe de guidage (20) relié à l'organe d'obturation (2), et l'organe d'obturation (2) est muni d'un épaulement de fermeture (21), annulaire, venant axialement en saillie qui chevauche en partie la rainure annulaire (200), et
le joint d'étanchéité (3) présente au moins une surface enveloppe extérieure cylindrique (30) et une surface frontale plane (31, 32) rejoignant l'enveloppe extérieure, et tournée vers le siège d'étanchéité (1), cette surface frontale plane comporte une arête d'étanchéité (33, 34) tournée vers le siège d'étanchéité (1) et le Joint d'étanchéité (3) s'appuie par au moins une partie de la surface enveloppe extérieure (30) contre le côté intérieur (210) de l'épaulement de fermeture (21).

2. Dispositif d'arrêt selon la revendication 1,
**caractérisé en ce que**
la surface enveloppe extérieure (30) du joint (3) comporte au niveau de ses deux zones d'extrémité, chaque fois une surface frontale plane (31, 32) adjacente et le joint (3) est un joint annulaire logé dans la rainure annulaire (200) de façon que lorsque la première arête d'étanchéité (33) est usée, il suffit de retourner le joint (33) de 180° pour disposer d'une seconde arête d'étanchéité (34).

3. Dispositif d'arrêt selon la revendication 1 ou 2,
**caractérisé en ce que**
l'organe de guidage (20) est fixé à l'organe d'obturation (2) par un filetage (201).

4. Dispositif d'arrêt selon au moins l'une des revendications 1 à 3,
**caractérisé en ce que**
l'épaulement d'obturation (21) entoure par sa surface intérieure (210), sensiblement la moitié de l'enveloppe extérieure (30) du joint (31) à l'opposé de l'arête d'étanchéité (33).

5. Dispositif d'arrêt selon au moins l'une des revendications 1 à 4,
**caractérisé en ce que**
la zone (35) du joint (3) reçue dans la rainure annulaire (200) a une section en forme de demi-cercle alors que la rainure annulaire (200) a une section rectangulaire, de sorte que pour une certaine compression de l'arête d'étanchéité (33, 34) contre le siège d'étanchéité (1), la matière d'étanchéité s'échappe élastiquement dans le secteur libre des coins de la rainure annulaire (200).

6. Dispositif d'arrêt selon l'une quelconque des revendications 1 à 5,
**caractérisé en ce que**
le joint (3) a une épaisseur (36) qui correspond sensiblement à un cinquième du diamètre libre (11) d'ouverture du siège d'étanchéité (1).

7. Dispositif d'arrêt selon la revendication 6,
**caractérisé en ce que**
la surface de la section du joint d'étanchéité (3) a une largeur (37) qui correspond sensiblement à l'épaisseur (36).
